Europäisches Patentamt

European Patent Office

Office européen des brevets

(19)

(11) Numéro de publication: **0 122 905**

**A2**

(12) # DEMANDE DE BREVET EUROPEEN

(21) Numéro de dépôt: 84870038.1

(22) Date de dépôt: 14.03.84

(51) Int. Cl.³: **B 32 B 15/10**

(30) Priorité: 19.04.83 BE 210580

(43) Date de publication de la demande:
24.10.84 Bulletin 84/43

(84) Etats contractants désignés:
DE FR GB LU NL

(71) Demandeur: PANOBEL PVBA
Bissegemsestraat, 33
B-8710 Heule-Kortrijk(BE)

(72) Inventeur: de Jaegher, Etienne
Erasmuslaan, 30
B-8700 Kortrijk(BE)

(74) Mandataire: De Brabanter, Maurice et al,
Bureau VANDER HAEGHEN 63 Avenue de la Toison d'Or
B-1060 Bruxelles(BE)

(54) Panneaux de fibres et copeaux de bois résistant à l'humidité.

(57) Pour protéger un panneau de fibres ou copeaux de bois de l'humidité, on recouvre au moins une face dudit panneau d'une couche d'aluminium (2). On obtient ainsi un panneau dont l'emploi convient pour le clousonnage d'un mur et la réalisation d'un plafond. La couche d'aluminium consiste en une feuille d'aluminium collée ou en une feuille complexe de papier aluminium.

FIG. 2

EP 0 122 905 A2

L'invention est relative à un panneau de fibres ou copeaux de bois résistant à l'humidité et susceptible d'être utilisé pour le cloisonnage des murs et élément de plafond. Ce panneau trouve sa principale application comme murs de séparation et dalles de plafond dans l'industrie du bâtiment. Les propriétés de réflection thermique de ce panneau ,la résistance à l'eau et à l'humidité ne sont pas seulement judicieusement utilisées dans une construction neuve mais également dans les travaux de rénovation.

On connaît déjà un revêtement de mur stabilisé apte à retenir l'humidité présente dans un mur. Il s'agit d'un papier peint dont l'âme comporte une très fine feuille d'aluminium. La face visible est parachevée d'une couche protectrice décorative, tandis que la face arrière est recouverte éventuellement d'une couche autocollante.

Ce type de revêtement mural amène de nombreux avantages, entre autres dans le domaine de l'isolation et d'économie d'énergie, grâce à sa propriété de réfléchir la chaleur. Son application reste cependant limitée au revêtement de murs existants en raison de son manque de rigidité.

On connaît également des dalles isolantes pour revêtement de sol, réalisées par défibrage de fibres de bois naturelles, protégées inférieurement par une feuille d'aluminium étanche à la vapeur d'eau.

On veille spécialement au mode de feutrage et d'encollage homogène du panneau avec le pouvoir égalisateur et l'élasticité optimale afin d'assurer une rigidité et une résistance à la traction suffisante. Ceci est entre autres indispensable pour éviter des fissures dans la couche d'aluminium ou l'écaillage. Pour éviter une éventuelle flexion des dalles, on limite les dimensions de ces dernières à moins d'un mètre.

La présente invention vise à éviter les inconvénients des revêtements précités et à conférer les propriétés de perméabilité à la vapeur d'eau, d'étanchéité à l'eau et d'isolation que présente l'aluminium à un support sensiblement flexible présentant des dimensions illimitées.

Elle est relative à un panneau de fibres ou copeaux de bois résistant à l'humidité et susceptible d'être utilisé pour le cloisonnage des murs et élément de plafond, essentiellement caractérisé en ce que ce panneau présente au moins une face qui est recouverte d'une couche d'aluminium.

Suivant une particularité de l'invention, la couche d'aluminium consiste en une feuille d'aluminium collée ou en une feuille complexe de papier d'aluminium.

Dans une forme de réalisation spécifique, les faces avant et arrière du panneau sont toutes deux couvertes d'une couche d'aluminium.

Le panneau précité a de préférence une épaisseur d'environ 5 à 20 millimètres et la couche d'aluminium une épaisseur d'environ 5 à 20 microns.

L'invention concerne aussi un procédé pour fabriquer des panneaux de fibres ou de copeaux de bois précités résistant à l'humidité.

On chauffe de préférence chaque panneau en même temps que la feuille d'aluminium à environ 45°C, avant de coller cette dernière avec une colle aqueuse d'alcool polyvinylique.

Ces particularité et détails de l'invention, ainsi que d'autres, apparaîtront au cours de la description détaillée suivante d'une forme de réalisation spécifique de l'invention, faisant référence aux dessins joints en annexe, dans lesquels :

- la figure 1 est une coupe transversale d'un panneau de fibres de bois suivant l'invention ;

- la figure 2 est une vue latérale d'une machine d'encollage destinée à apporter une feuille d'aluminium sur chaque face d'un panneau de fibres.

Dans ces dessins, les mêmes numéros de référence désignent des éléments identiques ou analogues.

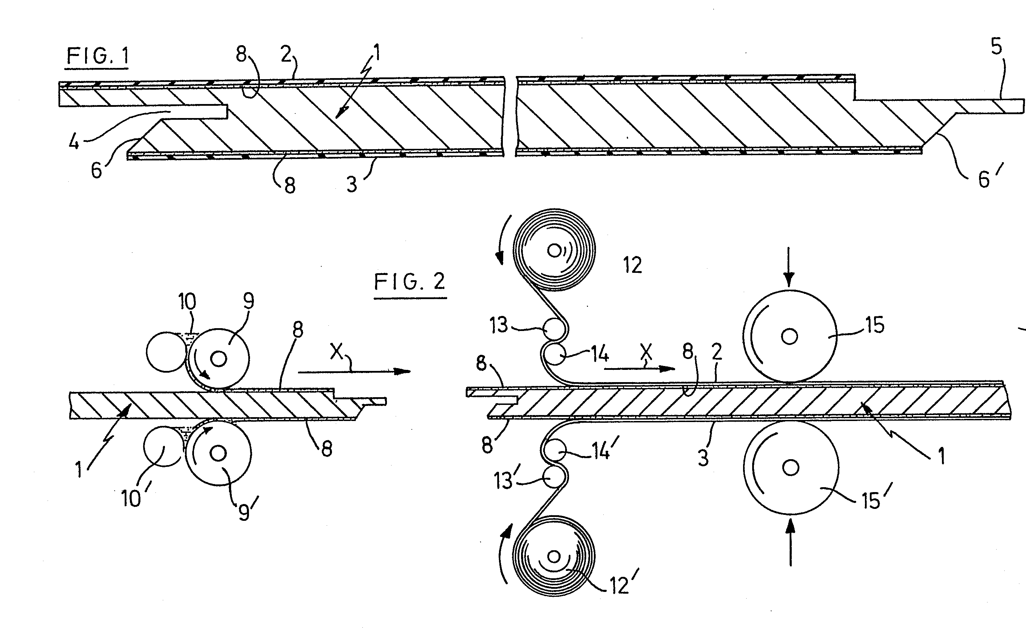

Comme montré à la figure 1, le panneau résistant à l'humidité suivant l'invention comporte un panneau qui est fabriqué par défibrage et collage de fibres naturelles de bois ou de copeaux de bois et qui est désigné dans son ensemble par la notation de référence 1.

Ce panneau peut aussi être réalisé à partir d'autres fibres ou à partir de tiges de lin.

Sur une première face du panneau 1, on applique une fine couche d'aluminium 2 d'environ une dizaine de microns, par encollage d'une feuille d'aluminium. La feuille d'aluminium peut être fixée préalablement sur une pellicule de matière synthétique ou sur une feuille de papier, qui est collée à son tour sur le panneau 1 susdit.

La deuxième face 3 du panneau de fibres ou copeau est éventuellement munie de papier aluminiumisé ou de feuille d'aluminium. Elle peut aussi être protégée par une couche décorative. Celle-ci consiste de préférence en une couche de matière synthétique telle que le chlorure de polyvinyle.

La couche d'aluminium 2 confère d'excellentes propriétés d'imperméabilité à la vapeur d'eau et de résistance à l'humidité. En outre, cette couche est résistante aux acides et aux bases. Elle offre une résistance particulière à l'huile, à la graisse et à la corrosion atmosphérique, entre autres à la condensation répétée de la vapeur d'eau dans un local humide, comme par exemple une cuisine, une salle de bain, un hall, un réduit, une cave ou un atelier. Elle possède des propriétés mécaniques remarquables et supporte entre autres les chocs.

La couche d'aluminium 2 apporte aussi des avantages dans une construction neuve par le fait qu'elle protège un panneau de fibres contre des déformations qui auraient pu être causées par une humidité rémanente.

Le pouvoir réfléchissant de l'aluminium pour la lumière blanche atteint plus de 90 %. La résistance au ternissement et oxydation ultérieure est parfaite grâce à la formation d'une pellicule superficielle protectrice d'oxyde d'aluminium.

5

La couche d'aluminium ne demande aucun entretien.

Elle est inaltérable et bon marché. Pour réussir à apposer l'aluminium sur un panneau de fibres ou de copeaux, il faut néanmoins résoudre de nombreux problèmes.

Un panneau de fibres de bois présentant des dimensions commerciales de 3 mètres sur 2 mètres est soumis lors du traitement et en charge utile, à une certaine flexion. De ce fait, la fibre extérieure du panneau est soumise à une élongation ou à un rétrécissement qui comporte 0,5 % de la longueur normale.

Une éprouvette d'aluminium a une propriété d'élongation comprise entre 30 et 35 %, de sorte que l'allongement susdit se trouve encore dans le domaine élastique.

Puisque l'aluminium a un module d'élasticité égal à 700.000 kg/cm$^2$, c'est-à-dire un tiers de celui de l'acier, il est nécessaire de coller solidement la feuille d'aluminium. On utilise de préférence comme enduit de la colle d'alcool polyvinylique.

Le coefficient de dilatation thermique de l'aluminium atteint 0,023 mm/m °C. Ceci n'entraîne pas le détachement de la feuille d'aluminium, lorsque celle-ci est collée avec un soin suffisant.

La fixation de deux panneaux entre eux se réalise par tenon 4 et mortaise 5 pourvus de profils complémentaires 6,6'.

Pour obtenir une bonne adhérence de la feuille d'aluminium, on procède de la manière suivante.

Un panneau de fibres ou copeaux de bois rigide séché, d'une largeur de 1 mètre à 1300 mm, d'une longueur de 2 à 3 mètres et d'une épaisseur de 6 mm, est préchauffé à 45°C dans un four de séchage électrique 7 et enduit sur ses deux faces de colle d'alcool polyvinylique 8. L'étalement de la colle sur toute la surface du panneau se réalise dans une machine d'encollage du type FRIZ, à l'aide de deux rouleaux doubles 9, 10, 9' et 10' qui sont montés de chaque côté du panneau 1. On introduit une certaine quantité de colle 11, 11' entre chaque paire de rouleaux.

La progression du panneau 1 dans la machine susdite en direction de la flèche X est de 6 mètres par minute. La quantité de colle 8 comporte environ 100 g/m$^2$.

Dans cette machine d'encollage sont montés également deux rouleaux de forme cylindrique en aluminium 12, 12' au-dessus et en dessous d'un plan de travail. La feuille d'aluminium possède une épaisseur d'environ 9 à 10 microns, tandis qu'elle est étanche à l'eau et résiste à l'humidité, bien qu'elle soit partiellement perméable à la vapeur d'eau et qu'elle puisse encore respirer.

La feuille d'aluminium est préchauffée au cours de son déroulement par de petits rouleaux 13, 14, 13', 14' jusqu'à une température de 45°C. Ces rouleaux sont pourvus d'une circulation d'eau chaude. La feuille d'aluminium réchauffée est appliquée de chaque côté du panneau et comprimée au moyen des rouleaux de laminage 15, 15' avec une forte pression contre les surfaces encollées.

Les panneaux de fibres recouverts d'aluminium sont alors séchés à température ambiante et empilés les uns au-dessus des autres.

Il est évident que l'invention n'est pas limitée à la forme de réalisation précitée et que de nombreux amendements peuvent y être apportés sans que l'on ne sorte du cadre de l'invention.

Ainsi, les panneaux peuvent être disposés les uns au-dessus des autres à joints lisses.

Au lieu des fibres et copeaux de bois, on peut réaliser les panneaux en d'autres fibres et copeaux, par exemple à partir de tiges de lin.

# REVENDICATIONS

1. Panneau de fibres ou copeau de bois résistant à l'humidité et susceptible d'être utilisé pour le cloisonnage des murs et élément de plafond, caractérisé en ce qu'il présente au moins une face qui est recouverte d'une couche d'aluminium (2).

2. Panneau suivant la revendication 1, caractérisé en ce que la couche d'aluminium (2) consiste en une feuille d'aluminium collée ou en une feuille complexe de papier d'aluminium.

3. Panneau suivant l'une quelconque des revendications précédentes, caractérisé en ce que la face frontale (3) du panneau (1) est recouverte d'une couche protectrice décorative et en ce que la face arrière du panneau est recouverte d'une couche d'aluminium (2).

4. Panneau suivant la revendication 1 ou 2, caractérisé en ce que les faces avant et arrière du panneau sont toutes deux couvertes d'une couche d'aluminium (2,3).

5. Panneau suivant l'une quelconque des revendications précédentes, caractérisé en ce que le panneau précité a de préférence une épaisseur d'environ 5 à 20 millimètres et la couche d'aluminium (2) une épaisseur d'environ 5 à 20 microns.

6. Panneau suivant l'une quelconque des revendications précédentes, caractérisé en ce que la feuille d'aluminium ou de papier d'aluminium est collée sur le panneau susdit à l'aide de colle à base d'alcool polyvinylique.

7. Panneau suivant l'une quelconque des revendications précédentes, caractérisé en ce que les faces latérales du panneau sont pourvues d'une corniche à tenon et mortaise.

8. Procédé pour fabriquer les panneaux de fibres ou copeaux de bois résistant à l'humidité suivant l'une quelconque des revendications précédentes, caractérisé en ce qu'on chauffe de préférence chaque panneau en même temps que la feuille d'aluminium à environ 45°C, avant de coller cette dernière avec une colle aqueuse d'alcool polyvinylique.

FIG. 1

FIG. 2

0122905